# EUROPEAN PATENT SPECIFICATION

(11) **EP 4 114 120 B1**
(45) Date of publication and mention of the grant of the patent: **16.04.2025**
(21) Application number: 21183257.1
(22) Date of filing: 01.07.2021
(51) Int. Cl.: H04W 74/08, H04L 5/00, H04W 12/037

(54) **APPARATUSES FOR COMMUNICATION SYSTEMS INVOLVING INCORPORATING USER EQUIPMENT IDENTIFIERS INTO CONTROL CHANNEL TRANSMISSIONS**
VORRICHTUNGEN FÜR KOMMUNIKATIONSSYSTEME UNTER EINBEZIEHUNG VON BENUTZERGERÄTE-IDENTIFIKATOREN IN STEUERKANALÜBERTRAGUNGEN
APPAREILS POUR SYSTÈMES DE COMMUNICATION IMPLIQUANT L'INCORPORATION D'IDENTIFICATEURS D'ÉQUIPEMENT D'UTILISATEUR DANS DES TRANSMISSIONS DE CANAL DE COMMANDE

(43) Date of publication of application: 04.01.2023
(73) Proprietor: Nokia Technologies Oy, 02610 Espoo (FI)
(72) Inventor: DECARREAU, Guillaume, 81737 Munich (DE); TURTINEN, Samuli Heikki, 91100 Ii (FI); SCHNEIDER, Peter, 83607 Holzkirchen (DE)
(74) Representative: Page White Farrer

(56) References cited:
- WO-A1-2018/131956
- WO-A1-2021/091461
- US-A1- 2021 144 581
- FUJITSU: "Considerations on MsgB reception", vol. RAN WG2, no. Chongqing, China; 20191014 - 20191018, 4 October 2019 (2019-10-04), XP051804875, Retrieved from the Internet <URL:https://ftp.3gpp.org/tsg_ran/WG2_RL2/TSGR2_107bis/Docs/R2-1913168.zip R2-1913168 Considerations on MsgB reception.doc> [retrieved on 20191004]

## Description

### TECHNICAL FIELD

The present disclosure relates to apparatuses for communication systems involving the incorporation into control channel transmissions of identifiers by which a user equipment (UE) can identify control channel transmissions specific thereto.

### BACKGROUND

Some communication systems involve a base station (e.g. eNB or gNB) making UE-specific control channel transmissions (e.g. physical downlink control channel PDCCH transmission) for a plurality of UEs. A control channel transmission specific to a UE may, for example, indicate the allocation of data channel resources (e.g. physical downlink shared channel PDSCH and/or physical uplink shared channel PUSCH resources) to uplink and/or downlink transmissions for the UE. A control channel transmission specific to a UE incorporates an identifier for the UE. The UE searches control channel transmission resources for a control channel transmission incorporating the identifier for the UE.

US2021144581A1 discloses a method of operating a BS includes generating an indicator indicating that the BS is capable of supporting a high-capacity radio network temporary identifier (HC-RNTI), wherein a size of the HC-RNTI is based on a configurable granularity; generating a system information block including the indicator and information indicating the size of the HC-RNTI; transmitting, to a UE, the system information block; and transmitting, to the UE, the HC-RNTI, wherein the HC-RNTI is allocated to the UE.

WO2021091461A1 discloses a method performed by a wireless device for determining an identity of the wireless device , MsgB RNTI, in a wireless communications network during a random access procedure. The wireless device transmits a random access preamble on a RACH at a random access occasion. It also transmits a message on a PUSCH that corresponds to the random access preamble. Further, the wireless device determines an MsgB RNTI as the sum of a first identity, RA-RNTI, and an offset that is an integer greater than 1, wherein the RA-RNTI is based on a sum comprising terms corresponding to at least the index of a first OFDM symbol, the index of a frequency resource, and the index of a first time slot that identifies the time/frequency resources of the random access occasion.

WO2018131956A1 provides a method by a terminal in a wireless communication system. The method includes receiving, from a base station, a paging message for switching a mode of the terminal in a RRC inactive mode to an RRC idle mode, transmitting an RRC message to the base station based on reception of the paging message, receiving an RRC connection release message from the base station, and transitioning from the RRC inactive mode to the RRC idle mode based on the RRC connection release message.

"Considerations on MsgB reception" (FUJITSU, vol. RAN WG2, no. Chongqing, China; 20191014 - 20191018, (20191004), 3GPP DRAFT; R2-1913168) discuss reception of MsgB in 2-step RACH, i.e. the issue related to RA-RNTI ambiguity within the MsgB reception window and how to distinguish msg2 and MsgB.

### SUMMARY

The invention is defined by the appended independent claims. Further advantageous embodiments are defined in the dependent claims.

Apparatus comprising: means for duplicating base station computation of an identifier value for a user equipment; and means for searching for one or more control channel transmissions incorporating an identifier value matching the identifier value.

The means for duplicating base station computation of an identifier value for the user equipment may comprise means for computing an identifier value based on one or more input parameter values and one or more mathematical functions used at the base station to compute an identifier value for the user equipment.

Computation of an identifier value may be based at least partly on a value of a time-related parameter; and the computed identifier value may be effective for a time period related to the value of the time-related parameter.

The apparatus may further comprise: means for duplicating base station computation of a further identifier value; and means for, after expiry of the time period, searching for one or more control channel transmissions incorporating an identifier value matching the further identifier value.

The time-related parameter may be a system frame number.

Computation of an identifier value may be at least partly based on a security key value derived at least partly from a secret key shared between the base station and the user equipment.

Computation of an identifier value may be at least partly based on a start value included in a random access reply message.

The one or more control channel transmissions may indicate radio resources allocated to the user equipment for downlink and/or uplink transmissions.

Apparatus comprising: means for duplicating user equipment computation of an identifier value for the user equipment; and means for incorporating the identifier value into one or more control channel transmissions specific to the user equipment.

The means for duplicating user equipment computation of an identifier value for the user equipment may comprise means for computing an identifier value based on one or more input parameter values and one or more mathematical functions used at the user equipment to compute an identifier value for the user equipment.

The apparatus may comprise: means for sending to the user equipment a base value for computation of an identifier value; and means for, in response to thereafter determining that computation based on the base value generates an identifier value that clashes with one or more identifier values for one or more other user equipments sharing radio resources for control channel transmissions with the user equipment, sending a new base value to the user equipment.

Apparatus comprising: means for recovering a sequence of identifier values for a user equipment from a radio transmission; and means for searching for one or more control channel transmissions incorporating an identifier value matching one of the sequence of identifier values.

The sequence of identifier values for the user equipment may comprise at least a first identifier value effective for a first time period, and a second identifier value effective for a second time period after the first time period; and the apparatus may comprise: means for, during the first time period, searching for one or more control channel transmissions incorporating an identifier value matching the first identifier value, and, during the second time period, searching for one or more control channel transmissions incorporating an identifier value matching the second identifier value. Apparatus comprising: means for transmitting an indication of a sequence of identifier values for a user equipment; and means for incorporating one of the sequence of identifier values for the user equipment into one or more control channel transmissions specific to the user equipment.

The sequence of identifier values for the user equipment may comprise at least a first identifier value effective for a first time period, and a second identifier value effective for a second time period after the first time period; and the apparatus may comprise: means for, during the first time period, making one or more control channel transmissions incorporating the first identifier value, and, during the second time period, making one or more control channel transmissions incorporating the second identifier value.

In the above, many different aspects have been described. It should be appreciated that further aspects may be provided by the combination of any two or more of the aspects described above.

Various other aspects are also described in the following detailed description and in the attached claims.

### BRIEF DESCRIPTION OF THE FIGURES

Some example embodiments will now be described in further detail, by way of example only, with reference to the following examples and accompanying drawings, in which:
Figure 1 illustrates an example system to which embodiments may be applied;
Figure 2 shows a representation of an example of operations at a device implementing user equipment functionality and at a device implementing base station functionality according to an example embodiment;
Figure 3 shows a representation of an example of operations at a device implementing base station functionality according to an example embodiment;
Figure 4 shows a representation of another example of operations at a device implementing base station functionality according to an example embodiment;
Figure 5 shows a representation of example of operations at a device implementing user equipment functionality according to an example embodiment;
Figure 6 shows a representation of an example of operations at a device periodically computing identifier values according to an example embodiment;
Figure 7 shows a representation of an example of operations for a handover procedure;
Figure 8 shows a representation of an example of apparatus for implementing operations according to some example embodiments;
Figure 9 shows a representation of an example of non-volatile memory media.

### DETAILED DESCRIPTION

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. The embodiments may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

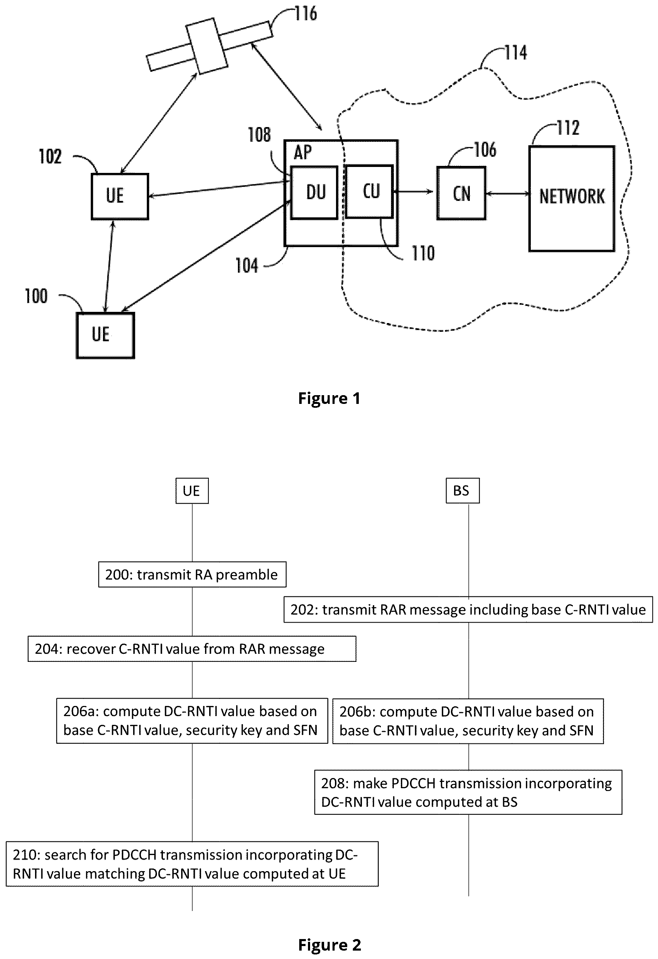

Fig. 1 depicts examples of simplified system architectures only showing some elements and functional entities, all being logical units, whose implementation may differ from what is shown. The connections shown in Fig. 1 are logical connections; the actual physical connections may be different. It is apparent to a person skilled in the art that the system typically comprises also other functions and structures than those shown in Fig. 1.

The embodiments are not, however, restricted to the system given as an example but a person skilled in the art may apply the solution to other communication systems provided with necessary properties.

The example of Fig. 1 shows a part of an exemplifying radio access network. For example, the radio access network may support sidelink communications described below in more detail.

Fig. 1 shows devices 100 and 102. The devices 100 and 102 are configured to be in a wireless connection on one or more communication channels with a node 104. The node 104 is further connected to a core network 106. In one example, the node 104 may be an access node such as (e/g)NodeB serving devices in a cell. In one example, the node 104 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 106 (CN or next generation core NGC). Depending on the deployed technology, the (e/g)NodeB is connected to a serving and packet data network gateway (S-GW +P-GW) or user plane function (UPF), for routing and forwarding user data packets and for providing connectivity of devices to one or more external packet data networks, and to a mobile management entity (MME) or access mobility management function (AMF), for controlling access and mobility of the devices.

Exemplary embodiments of a device are a subscriber unit, a user device, a user equipment (UE), a user terminal, a terminal device, a mobile station, a mobile device, etc The device typically refers to a mobile or static device ( e.g. a portable or non-portable computing device) that includes wireless mobile communication devices operating with or without an universal subscriber identification module (USIM), including, but not limited to, the following types of devices: mobile phone, smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud.

The device illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station. The device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control). 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 112, such as a public switched telephone network, or a VoIP network, or the Internet, or a private network, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 108) and non-real time functions being carried out in a centralized manner (in a centralized unit, CU 110).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, Mobile Broadband, (MBB) or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

It is clear to a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Fig. 1). A HNB Gateway (HNB-GW), which is typically installed within an operator's network may aggregate traffic from a large number of HNBs back to a core network.

Figure 2 illustrates an example of operations at a device implementing user equipment functionality, hereafter referred to as UE (such as e.g. UE 100 of Figure 1) and a device implementing base station functionality, hereafter referred to as BS (such as e.g. the e/gNB node 104 of Figure 1). UE 100 makes a random access preamble transmission (OPERATION 200 of Figure 2). The random access preamble transmission is successful, and BS 104 transmits a random access reply (RAR) message (OPERATION 202 of Figure 2). The RAR message includes a base identifier value (hereafter referred to as base C-RNTI (cell-radio network temporary identifier) value) for UE 100 to use as a start value to compute identifier values for the UE 100. UE 100 recovers the base C-RNTI value from the RAR message (OPERATION 204 of Figure 2).

Later, both UE 100 and BS 104 separately perform the same pre-determined computation of an identifier value (hereafter referred to as dynamic C-RNTI or DC-RNTI value) for the UE 100, using the base C-RNTI value as one input (OPERATIONS 206a and 206b of Figure 2). Duplicating BS computation of a DC-RNTI value for UE 100 at UE 100 uses the same one-way mathematical function(s) and inputs as the computation of a DC-RNTI value for UE 100 at BS 104. In this example, the computation inputs also include; (i) a security key (here referred to as K_{RNTI}) derived ultimately from a secret key pre-shared between UE 100 and a home subscriber server (HSS), which secret key is primarily used to authenticate the UE subscriber/user; and (ii) a time input related to the time at which both UE 100 and BS 104 are configured to compute the DC-RNTI value for UE 100. In one example, this time input is the value, at the time of DC-RNTI computation, of the system frame number (SFN) (or alternatively the hyper frame number (HFN)) of the cell via which the UE 100 has the RRC connection.

In this example, K_{RNTI} is derived from existing keys K_{eNB} or K_{gNB}, using the key derivation function (KDF) as mentioned in 3GPP TS 33.501, Annex A, with a further input comprising a FC-value from the FC number space controlled by TS 33.220, as mentioned at TS 33.501 A.1.2.

In this example, the DC-RNTI value is computed from the base C-RNTI value, the SFN/HFN and K_{RNTI} using a one-way mathematical function, such as the ones specified in the Milenage and Tuak algorithm sets identified in TS35.205 and TS35.231.

The SFN (used in this example as one of the inputs to compute the DC-RNTI value for UE 100) is broadcast by the cell, and has a value shared by all UEs served by the cell. An incremented SFN value is broadcast every 10 ms (in the physical broadcast channel (PBCH) for the cell). The SFN is 10 bits in length, and may therefore have 1024 different values. The SFN cycle (the time period over which the SFN value repeats) is 1024*10ms=10.24 seconds.

In another example, a hyper frame number (HFN) of the kind implemented in LTE is used instead of SFN as an input for computation of the DC-RNTI value. The HFN value increments when the SFN value is equal to 0. The HFN is also 10 bits in length. The HFN cycle (the time period over which the HFN value repeats) is 1024*1024*10ms=10485.76 second (about 7 days).

In another example, the timing reference broadcast in 5G NR as part of the 9th System Information Block (SIB9) is used instead of SFN or HFN as one input for computation of the DC-RNTI value.

BS 104 incorporates the DC-RNTI value computed at BS 104 for UE 100 into one or more control downlink channel transmissions (e.g. PDCCH transmissions) specific to UE 100 (OPERATION 208 of Figure 2); and UE 100 searches a search space for control channel transmissions incorporating a DC-RNTI value matching the DC-RNTI value computed at UE 100 for UE 100 (OPERATION 210 of Figure 2). In this example, incorporating the computed DC-RNTI value into a control channel transmission involves using the computed DC-RNTI value to modify the CRC (cyclic redundancy check) attached to the PDCCH payload (DCI (downlink control information) through a scrambling operation; and UE 100 searches the search space for a PDCCH transmission that it can correctly decode using the DC-RNTI value computed at UE 100.

The computed DC-RNTI value is thus used by UE 100 and BS 104 to distinguish control channel transmissions specific to the UE 100 from control channel transmissions specific to other UEs searching the same search space for DCI messages specific thereto. A control channel transmission (e.g. PDCCH transmission) incorporating the computed DC-RNTI value for UE 100 indicates data channel radio resources allocated to uplink transmissions by UE 100 and/or downlink transmissions specific to UE 100.

UE 100 is representative of a plurality of UEs searching the same search space for PDCCH transmissions incorporating a DC-RNTI value matching a DC-RNTI value computed at the respective UE based on a respective base C-RNTI value and a respective security key (K_{RNTI}).

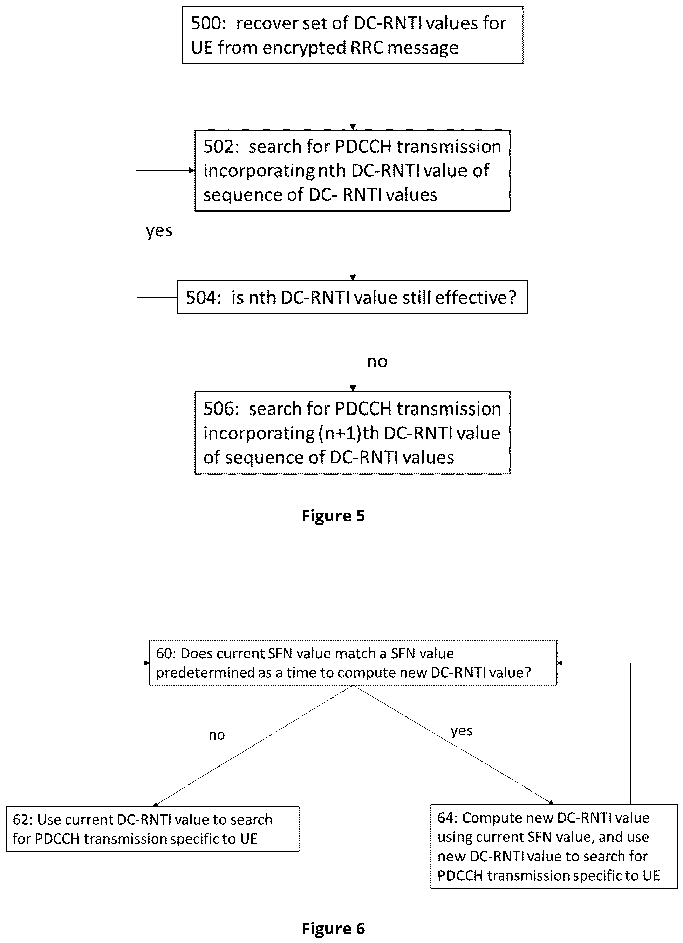

According to one example whose representation is shown in Figure 6, BS 104 periodically computes a fresh DC-RNTI for UE 100, and UE 100 duplicates the periodic computation of fresh DC-RNTI, again using the same one-way mathematical function and input parameters as BS 104. UE 100 and BS 104 may compute a fresh DC-RNTI (using e.g. the current SFN value as one input) at predetermined times (e.g. at predetermined values of SFN). The period between successive computations of a DC-RNTI value may, for example, be in the range of 10ms to hours or days. There may be a pre-configured default timing for the fresh computing of-RNTI values, which UE 100 adopts unless UE 100 has received an overriding individual configuration from BS 104.

With reference to Figure 6, UE 100 regularly determines whether the current SFN value is one for which the UE 100 is configured to compute a new DC-RNTI value (OPERATION 60). If the determination is negative, UE 100 continues to search the PDCCH search space for PDCCH transmissions incorporating a DC-RNTI value matching the existing DC-RNTI value (i.e. the DC-RNTI value most recently computed at UE 100) (OPERATION 62). On the other hand, if the determination is positive, UE 100 computes a new DC-RNTI value using the current SFN value as one input, and subsequently searches the PDCCH search space for PDCCH transmissions incorporating a DC-RNTI value matching the new DC-RNTI value computed at UE 100 (OPERATION 64 of Figure 6).

As mentioned above, one of the input parameters is the SFN value for the cell at the time of DC-RNTI computation, which is different to the SFN value used for the previous DC-RNTI computation and is also different to the SFN value that will be used for the subsequent DC-RNTI computation. In this way, control channel transmissions specific to UE 100 incorporate changing identifier values over time.

As mentioned above, UE 100 is representative of a plurality of UEs searching the same search space for control channel transmissions incorporating a DC-RNTI value matching the DC-RNTI value computed at UE 100 (based on the respective base C-RNTI value and respective security key value). According to this example embodiment, other UEs (or all UEs) of the plurality of UEs searching the same search space for PDCCH transmissions compute respective fresh DC-RNTI values at the same time. For example, the SFN/HFN values at which DC-RNTI computation is performed is the same for other UEs (e.g. all UEs searching the search space for control channel transmissions).

According to another example, BS 104 triggers the computation of a fresh DC-RNTI value. For example, the trigger may take the form of an encrypted RRC message.

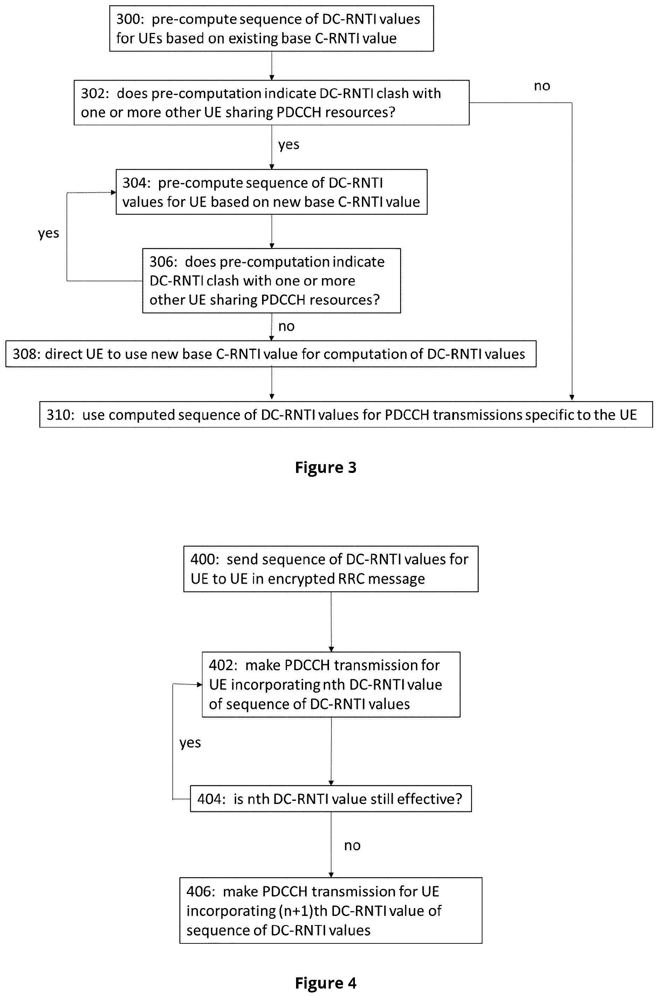

Figure 3 illustrates an example of operations at BS 104 aimed at avoiding DC-RNTI clashes between UEs searching the same search space for PDCCH transmissions. The operations are aimed at guaranteeing that the DC-RNTI value for UE 100 is unique to UE 100 at least among all UEs simultaneously searching the same search space for PDCCH transmissions.

BS 104 precomputes a sequence of DC-RNTI values for UE 100 based respectively on the predetermined SFN values at which UE 100 is configured to perform DC-RNTI computation (OPERATION 300 of Figure 3). The computation of each DC-RNTI value of the sequence is also based on the base C-RNTI value for UE 100 and the K_{RNTI} value for UE 100. The sequence of DC-RNTI values may comprise a predetermined number of DC-RNTI values (for a predetermined number of DC-RNTI computations for UE 100) or DC-RNTI values for a predetermined period of time. BS 104 does the same pre-computation for all other UEs sharing the same PDCCH search space as UE 104. BS 104 determines (OPERATION 302 of Figure 3) whether this pre-computation predicts one or more instances of DC-RNTI clashes with any other UE sharing the same PDCCH search space. If this pre-computation predicts no instances of any DC-RNTI clashes (i.e. predicts no instances of more than one UE computing the same DC-RNTI value for the same SFN value input), BS 104 takes no corrective action and uses the pre-computed DC-RNTI values for UE-specific PDCCH transmissions (OPERATION 310 of Figure 3). On the other hand, if the precomputation of a sequence of DC-RNTIs for UE 100 predicts one or more instances of a DC-RNTI clash with one or more other UEs, BS 104 precomputes a new sequence of DC-RNTI values for UE 100 based on a new base C-RNTI value (OPERATION 304 of Figure 3) and determines (OPERATION 306 of Figure 3) whether this pre-computation based on a new base C-RNTI value predicts one or more instances of DC-RNTI clashes with any other UE sharing the same PDCCH search space (OPERATION 306). BS 104 repeats this pair of operations 304 and 306 until it finds a new base C-RNTI value for which the pre-computation does not predict any DC-RNTI clashes. BS 104 then directs UE 100 to use the new base C-RNTI value for the computation of DC-RNTIs (OPERATION 308 of Figure 3). The new base C-RNTI value for UE 100 can be sent to the UE 100 via radio resources indicated to UE 100 by a PDCCH transmission incorporating the currently valid DC-RNTI value for UE 100.

Another example technique for avoiding DC-RNTI clashes is as follows. Instead of precomputing a future sequence of DC-RNTI values for UE 100 (and respective future sequences of DC-RNTI values for other UEs sharing the same PDCCH search space with UE 100), BS 104 checks for DC-RNTI clashes each time DC-RNTI values are about to be recomputed at UEs including UE 100. If the precomputation at BS 104 of the next round of DC-RNTIs for the UEs predicts a DC-RNTI clash for UE 100, BS 104 tries one or more new base C-RNTI values for UE 100 until BS 104 finds a new base C-RNTI value for which pre-computation of DC-RNTI values predicts no DC-RNTI clashes; and BS 104 sends the new base C-RNTI value to UE 100.

The implementation described so far has the advantage that no new information has to be passed between UE 100 and BS 104 for the generation of DC-RNTI values, except when an individual configuration for changing the DC-RNTI value is required, and/or unless a precomputation of DC-RNTI values at BS 104 predicts a DC-RNTI clash. The inputs for computing DC-RNTI values for UE are already available to UE 100. The base C-RNTI value is the C-RNTI value already included in the RAR message; the security key K_{RNTI} derived from a key already used at UE for other existing purposes at UE 100; and SFN values are already broadcast by the cell.

According to one example variation, BS 104 sends all parameters for computing the DC-RNTIs to UE 100 in an encrypted RRC message, such as, for example, the RRC reconfiguration message sent by BS 104 following the RRC security command procedure. For example, computation at the UE 100 may be based on: a K_{RNTI} value included in the encrypted RRC message; a starting value (instead of the C-RNTI value included in the RAR message); and the SFN value.

According to another example embodiment, UE 100 does not duplicate the BS computation of DC-RNTI values, but instead receives from BS 104 a sequence of DC-RNTI values to use over a period of time.

Figures 4 and 5 show a representation of the operations at BS 104 and UE 100 according to this example embodiment. BS 104 sends to UE 100 a sequence of DC-RNTI values that do not clash with DC-RNTI values sent to other UEs sharing the same PDCCH search space. The sequence of DC-RNTI values for UE 100 may be sent to UE 100 in an encrypted RRC message via data channel resources (e.g. PDSCH resources) indicated by a PDCCH transmission incorporating the C-RNTI value included in the RAR message (OPERATION 400 of Figure 4). UE 100 recovers the sequence of DC-RNTI values from the encrypted RRC message (OPERATION 500 of Figure 5). In this example, the DC-RNTI values of the sequence of DC-RNTI values are valid for respective consecutive periods of time; and UE 100 and BS 104 selectively use the DC-RNTI values of the sequence of DC-RNTI values for the respective periods of time for which they are valid. As shown by operations 402, 404 and 406 of Figure 4, BS 104 incorporates an nth DC-RNTI value into PDCCH transmissions specific to UE 100 for as long as the nth DC-RNTI value is valid, and then switches to incorporating the (n+1)th DC-RNTI value of the set of values into PDCCH transmissions specific to UE 100; and so on. As shown by operations 502, 504 and 506 of Figure 5: UE searches for PDCCH transmissions incorporating an nth DC-RNTI value for as long as the nth DC-RNTI value is valid, and then switches to searching for PDCCH transmissions incorporating the (n+1)th DC-RNTI value of the set of values; and so on.

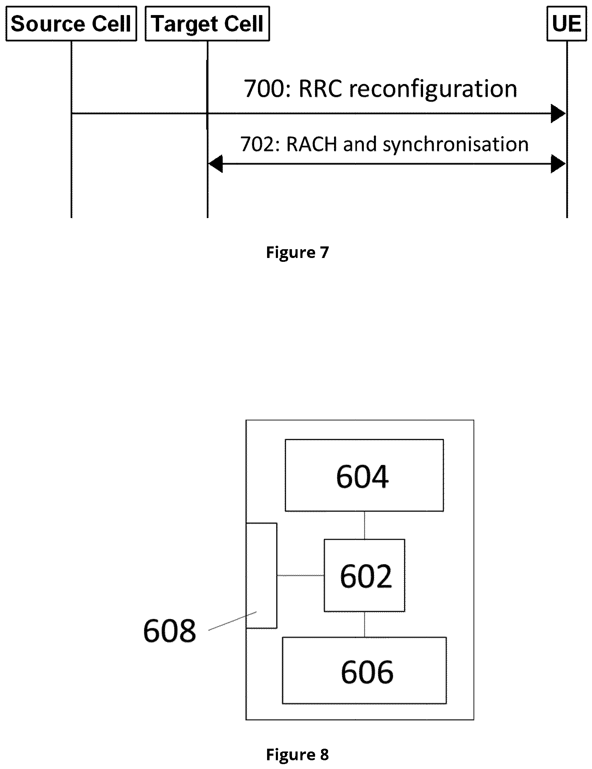

For all techniques described above, either (i) the information necessary for duplicating base station computation of DC-RNTI at UE 100 or (ii) a set of DC-RNTI values for UE 100, may be included in a RRC reconfiguration message sent to command or trigger a handover of UE 100 from a source cell to a target cell. Figure 7 shows a representation of an example of a handover of UE 100 from a source cell to a target cell. UE 100 receives (OPERATION 700 of Figure 7) via the source cell a RRC reconfiguration message including either (i) all the information UE 100 needs to duplicate base station computation of DC-RNTI value(s) at UE 100 or (ii) a sequence of DC-RNTI values. UE 100 performs handover (OPERATION 702 of Figure 7) using a DC-RNTI value computed at UE 100 using the information included in the RRC reconfiguration message, or a first one of the provided sequence of DC-RNTI values included in the RRC reconfiguration message.

Sending such an encrypted RRC reconfiguration message also in the event of an intra-cell handover (for which the source cell and the target cell are the same and only the used channel is changed) provides an opportunity to securely re-set the computation of DC-RNTI at UE 100 or provide UE 100 with a new sequence of DC-RNTI values.

Also in the event of restoring a RRC connection via a serving cell (for example, in the event of Beam Failure Recovery), UE may use a DC-RNTI value computed at UE 100 (or one of a sequence of DC-RNTI values received previously in an encrypted message via the serving cell). For the example of computing a DC-RNTI value at UE 100, the UE 100 reads the current SFN value from the master information block (MIB) broadcast by the serving cell.

The example embodiments described above can reduce the risk of a malicious third party being able to track the PDCCH transmissions specific to UE 100, and thus can increase security against PDCCH-tracking based attacks, and against man-in-the-middle (MITM) attacks by fake base stations (FBSs).

For example, the example embodiments can reduce the effectiveness of attacks in which the attacker relies on being able to identify PDCCH transmissions related to a GUTI (Globally Unique Temporary Identifier) or SUCI (Subscription Concealed Identifier) included in a register request via data channel resources scheduled by a PDCCH transmission.

For example, the example embodiments can thus reduce the risk of a malicious third party (with the extra assistance of additional intelligence (like physical observation)) being able to identify the human subscriber using the UE that sent the register request including the GUTI or SUCI.

For example, the example embodiments can reduce the effectiveness of attacks involving a malicious attacker sending traffic (e.g. a series of silent short messages, or a series of messenger messages) to a public address of a human victim known by the attacker to have a UE served by a particular cell, and then exploiting the characteristics of the traffic resulting from the traffic originated by the malicious attacker (like number and length of messages, timing).

For example, the example embodiments can increase security in networks where the GUTI is not changed frequently, by increasing the difficulty of determining which PDCCH transmissions are related to a GUTI (i.e. specific to a UE having the GUTI).

For example, the example embodiments can reduce the effectiveness of malicious attacks involving the attacker finding (by monitoring both source and target cells for a handover of UE 100 (and having possibly also other intelligence)) the C-RNTI value used in a random access (RA) procedure for the UE.

For example, the example embodiments can increase security against IMP4GT (IMPersonation Attacks in 4G NeTworks) involving an attacker relying on being able to map PDCCH transmissions to a GUTI. IMP4GT is described in a paper entitled "IMP4GT: IMPersonation Attacks in 4G NeTworks by David Rupprecht et al (DOI:10.14722/ndss.2020.24283).

For example, the example embodiments can reduce the effectiveness of attacks involving exploitation of unencrypted MAC control elements sent to a certain UE.

Figure 8 illustrates an example of an apparatus for implementing the operations of a device implementing UE or BS functionality. The apparatus may comprise at least one processor 602 coupled to one or more interfaces 608. In the case of a device implementing UE functionality, the one or more interfaces may be e.g. to other equipment for which the UE functionality provides radio communications. In the case of a device implementing base station functionality, the one or more interfaces may be e.g. to other devices implementing other network functionality such as devices implementing UPF (User Plane Function) functionality in a 5G system. The at least one processor 602 is also coupled to a radio unit 604 including one or more antennas etc. for making and receiving radio transmissions. The at least one processor 602 may also be coupled to at least one memory 606. The at least one processor 602 may be configured to execute an appropriate software code to perform the operations described above. The software code may be stored in the memory 606

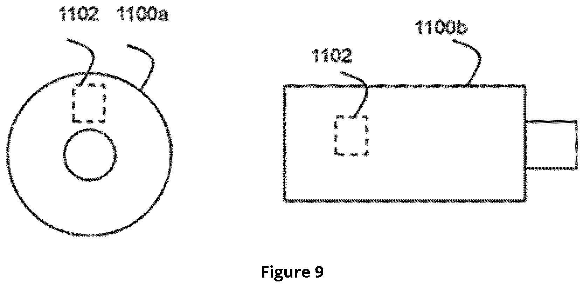

Figure 9 shows a schematic representation of non-volatile memory media 1100a (e.g. computer disc (CD) or digital versatile disc (DVD)) and 1100b (e.g. universal serial bus (USB) memory stick) storing instructions and/or parameters 1102 which when executed by a processor allow the processor to perform one or more of the steps of the methods described previously.

It is to be noted that embodiments of the present invention may be implemented as circuitry, in software, hardware, application logic or a combination of software, hardware and application logic. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as the base stations or user equipment of the above-described embodiments.

As used in this application, the term "circuitry" refers to all of the following: (a) hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as the user equipment or base stations of the above-described embodiments, to perform various functions) and (c) to circuits, such as a microprocessor(s) or a portion of a microprocessor(s), that require software or firmware for operation, even if the software or firmware is not physically present. This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device. The described features, advantages, and characteristics of the invention can be combined in any suitable manner in one or more embodiments. One skilled in the relevant art will recognize that the invention can be practiced without one or more of the specific features or advantages of a particular embodiment. In other instances, additional features and advantages can be recognized in certain embodiments that may not be present in all embodiments of the invention. One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention as defined by the appended claims.

## Claims

1. Apparatus comprising:
means for duplicating (206a) base station computation of an identifier value for a user equipment; and
means for searching (210) for one or more control channel transmissions incorporating an identifier value matching the identifier value,
wherein the means for duplicating base station computation of an identifier value for the user equipment comprises means for computing an identifier value based on the same one
or more input parameter values and one or more mathematical functions used at the base station to compute an identifier value for the user equipment,
wherein computation of an identifier value is at least partly based on a security key value derived at least partly from a secret key shared between the base station and the user equipment, and
wherein the means for searching for one or more control channel transmissions incorporating an identifier value matching the identifier value comprises means for searching for one or more control channel transmissions to be correctly decoded using the computed identifier value.

2. The apparatus according to claim 1, wherein: computation of an identifier value is based at least partly on a value of a time-related parameter; and wherein the computed identifier value is effective for a time period related to the value of the time-related parameter.

3. The apparatus according to claim 2, further comprising:
means for duplicating base station computation of a further identifier value; and
means for, after expiry of the time period, searching for one or more control channel transmissions incorporating an identifier value matching the further identifier value.

4. The apparatus according to claim 2 or claim 3, wherein the time-related parameter is a system frame number.

5. The apparatus according to any preceding claim, wherein computation of an identifier value is at least partly based on a start value included in a random access reply message.

6. The apparatus according to any preceding claim, wherein the one or more control channel transmissions indicate radio resources allocated to the user equipment for downlink and/or uplink transmissions.

7. Apparatus comprising:
means for duplicating (206b) user equipment computation of an identifier value for the user equipment; and
means for incorporating (208) the identifier value into one or more control channel transmissions specific to the user equipment,
wherein the means for duplicating user equipment computation of an identifier value for the user equipment comprises means for computing an identifier value based on the same
one or more input parameter values and one or more mathematical functions used at the user equipment to compute an identifier value for the user equipment,
wherein computation of an identifier value is at least partly based on a security key value derived at least partly from a secret key shared between the base station and the user equipment, and
wherein the means for incorporating the identifier value into one or more control channel transmissions specific to the user equipment comprises means for scrambling a cyclic redundancy check, CRC, attached to the one or more control channel transmissions payload using the computed identifier value.

8. The apparatus according to claim 7, comprising:
means for sending to the user equipment a base value for computation of an identifier value; and
means for, in response to thereafter determining that computation based on the base value generates an identifier value that clashes with one or more identifier values for one or more other user equipments sharing radio resources for control channel transmissions with the user equipment, sending a new base value to the user equipment.

## Patentansprüche

1. Vorrichtung, die Folgendes umfasst:
Mittel zum Duplizieren (206a) einer Basisstationsberechnung eines Kennungswertes für eine Teilnehmereinrichtung und
Mittel zum Suchen (210) nach einer oder mehreren Steuerkanalübertragungen, in die ein Kennungswert eingebunden ist, der mit dem Kennungswert übereinstimmt,
wobei die Mittel zum Duplizieren einer Basisstationsberechnung eines Kennungswertes für die Teilnehmereinrichtung Mittel zum Berechnen eines Kennungswertes auf Basis des einen oder der mehreren selben Eingabeparameterwerte und einer oder mehreren mathematischen Funktionen umfassen, die an der Basisstation zum Berechnen eines Kennungswertes für die Teilnehmereinrichtung verwendet werden,
wobei eine Berechnung eines Kennungswertes mindestens teilweise auf einem Sicherheitsschlüsselwert basiert, der mindestens teilweise von einem geheimen Schlüssel abgeleitet ist, der von der Basisstation und der Teilnehmereinrichtung gemeinsam verwendet wird, und
wobei die Mittel zum Suchen nach einer oder mehreren Steuerkanalübertragungen, in die ein Kennungswert eingebunden ist, der mit dem Kennungswert übereinstimmt, Mittel zum Suchen nach einer oder mehreren Steuerkanalübertragungen umfassen, die unter Verwendung des berechneten Kennungswertes korrekt zu decodieren sind.

2. Vorrichtung nach Anspruch 1, wobei: eine Berechnung eines Kennungswertes mindestens teilweise auf einem Wert eines zeitbezogenen Parameters basiert; und wobei der berechnete Kennungswert für eine Zeitperiode, die sich auf den Wert des zeitbezogenen Parameters bezieht, effektiv ist.

3. Vorrichtung nach Anspruch 2, die ferner Folgendes umfasst:
Mittel zum Duplizieren einer Basisstationsberechnung eines weiteren Kennungswertes und
nach Ablauf der Zeitperiode Mittel zum Suchen nach einer oder mehreren Steuerkanalübertragungen, in die ein Kennungswert eingebunden ist, der mit dem weiteren Kennungswert übereinstimmt.

4. Vorrichtung nach Anspruch 2 oder Anspruch 3, wobei der zeitbezogene Parameter eine Systemframenummer ist.

5. Vorrichtung nach einem der vorhergehenden Ansprüche, wobei eine Berechnung eines Kennungswertes mindestens teilweise auf einem Startwert basiert, der in einer Direktzugriffsantwortnachricht beinhaltet ist.

6. Vorrichtung nach einem der vorhergehenden Ansprüche, wobei die eine oder die mehreren Steuerkanalübertragungen Funkressourcen anzeigen, die der Teilnehmereinrichtung für Downlink- und/oder Uplinkübertragungen zugeteilt sind.

7. Vorrichtung, die Folgendes umfasst:
Mittel zum Duplizieren (206b) einer Teilnehmereinrichtungsberechnung eines Kennungswertes für die Teilnehmereinrichtung und
Mittel zum Einbinden (208) des Kennungswertes in die eine oder die mehreren Steuerkanalübertragungen, die speziell für die Teilnehmereinrichtung gelten,
wobei die Mittel zum Duplizieren einer Teilnehmereinrichtungsberechnung eines Kennungswertes für die Teilnehmereinrichtung Mittel zum Berechnen eines Kennungswertes auf Basis des einen oder der mehreren selben Eingabeparameterwerte und einer oder mehreren mathematischen Funktionen umfassen, die an der Teilnehmereinrichtung zum Berechnen eines Kennungswertes für die Teilnehmereinrichtung verwendet werden,
wobei eine Berechnung eines Kennungswertes mindestens teilweise auf einem Sicherheitsschlüsselwert basiert, der mindestens teilweise von einem geheimen Schlüssel abgeleitet ist, der von der Basisstation und der Teilnehmereinrichtung gemeinsam verwendet wird, und
wobei die Mittel zum Einbinden des Kennungswertes in die eine oder die mehreren Steuerkanalübertragungen, die speziell für die Teilnehmereinrichtung gelten, Mittel zum Scrambeln einer zyklischen Redundanzprüfung, CRC, umfassen, die an die Nutzdaten der einen oder der mehreren Steuerkanalübertragungen unter Verwendung des berechneten Kennungswertes angehängt ist.

8. Vorrichtung nach Anspruch 7, die Folgendes umfasst:
Mittel zum Senden eines Basiswertes für eine Berechnung eines Kennungswertes an die Teilnehmereinrichtung und
in Reaktion auf das nachfolgende Bestimmen, dass eine Berechnung auf Basis des Basiswertes einen Kennungswert erzeugt, der mit einem oder mehreren Kennungswerten für eine oder mehrere weitere Teilnehmereinrichtungen kollidiert, Mittel zum gemeinsamen Verwenden von Funkressourcen für Steuerkanalübertragungen mit der Teilnehmereinrichtung, Senden eines neuen Basiswertes an die Teilnehmereinrichtung.

## Revendications

1. Appareil comprenant :
des moyens pour dupliquer (206a) un calcul de station de base d'une valeur d'identifiant pour un équipement utilisateur ; et
des moyens pour chercher (210) une ou plusieurs transmissions de canal de contrôle incorporant une valeur d'identifiant concordant avec la valeur d'identifiant,
dans lequel les moyens pour dupliquer un calcul de station de base d'une valeur d'identifiant pour l'équipement utilisateur comprennent des moyens pour calculer une valeur d'identifiant en fonction des mêmes une ou plusieurs valeurs de paramètres d'entrée et une ou plusieurs fonctions mathématiques utilisées au niveau de la station de base pour calculer une valeur d'identifiant pour l'équipement utilisateur,
dans lequel le calcul d'une valeur d'identifiant est au moins partiellement basé sur une valeur de clé de sécurité dérivée au moins partiellement d'une clé secrète partagée entre la station de base et l'équipement utilisateur, et
dans lequel les moyens pour chercher une ou plusieurs transmissions de canal de contrôle incorporant une valeur d'identifiant concordant avec la valeur d'identifiant comprennent des moyens pour chercher une ou plusieurs transmissions de canal de contrôle à décoder correctement en utilisant la valeur d'identifiant calculée.

2. Appareil selon la revendication 1, dans lequel : le calcul d'une valeur d'identifiant est basé au moins en partie sur une valeur d'un paramètre lié au temps ; et dans lequel la valeur d'identifiant calculée est effective pendant une période de temps liée à la valeur du paramètre lié au temps.

3. Appareil selon la revendication 2, comprenant en outre :
des moyens pour dupliquer un calcul de station de base d'une valeur d'identifiant supplémentaire ; et
des moyens pour chercher, après l'expiration de la période de temps, une ou plusieurs transmissions de canal de contrôle incorporant une valeur d'identifiant concordant avec la valeur d'identifiant supplémentaire.

4. Appareil selon la revendication 2 ou la revendication 3, dans lequel le paramètre lié au temps est un numéro de trame de système.

5. Appareil selon l'une des revendications précédentes, dans lequel le calcul d'une valeur d'identifiant est au moins partiellement basé sur une valeur de départ incluse dans un message de réponse d'accès aléatoire.

6. Appareil selon l'une des revendications précédentes, dans lequel les une ou plusieurs transmissions de canal de contrôle indiquent des ressources radio allouées à l'équipement utilisateur pour des transmissions de liaison descendante et/ou de liaison montante.

7. Appareil comprenant :
des moyens pour dupliquer (206b) un calcul d'équipement utilisateur d'une valeur d'identifiant pour l'équipement utilisateur ; et
des moyens pour incorporer (208) la valeur d'identifiant dans une ou plusieurs transmissions de canal de contrôle spécifiques à l'équipement utilisateur,
dans lequel les moyens pour dupliquer un calcul d'équipement utilisateur d'une valeur d'identifiant pour l'équipement utilisateur comprennent des moyens pour calculer une valeur d'identifiant en fonction des mêmes une ou plusieurs valeurs de paramètres d'entrée et une ou plusieurs fonctions mathématiques utilisées sur l'équipement utilisateur pour calculer une valeur d'identifiant pour l'équipement utilisateur,
dans lequel le calcul d'une valeur d'identifiant est au moins partiellement basé sur une valeur de clé de sécurité dérivée au moins partiellement d'une clé secrète partagée entre la station de base et l'équipement utilisateur, et
dans lequel les moyens pour incorporer la valeur d'identifiant dans une ou plusieurs transmissions de canal de contrôle spécifiques à l'équipement utilisateur comprennent des moyens pour brouiller un contrôle de redondance cyclique, CRC, attaché à la charge utile des une ou plusieurs transmissions de canal de contrôle en utilisant la valeur d'identifiant calculée.

8. Appareil selon la revendication 7, comprenant :
des moyens pour envoyer à l'équipement utilisateur une valeur de base pour le calcul d'une valeur d'identifiant ; et
des moyens pour, après avoir déterminé que le calcul basé sur la valeur de base génère une valeur d'identifiant qui entre en conflit avec une ou plusieurs valeurs d'identifiants pour un ou plusieurs autres équipements utilisateurs partageant des ressources radio pour les transmissions de canal de contrôle avec l'équipement utilisateur, envoyer une nouvelle valeur de base à l'équipement utilisateur.
